# EUROPEAN PATENT SPECIFICATION

(11) **EP 3 290 159 B1**
(45) Date of publication and mention of the grant of the patent: **19.06.2019**
(21) Application number: 17188819.1
(22) Date of filing: 31.08.2017
(51) Int. Cl.: B25C 1/00, B23P 19/00, B25B 23/04, B25C 5/16

(54) **BAND REELING DEVICE**
BANDAUFROLLER
DISPOSITIF D'ENROULEMENT DE BANDE

(30) Priority: 01.09.2016 SE 1651174
(43) Date of publication of application: 07.03.2018
(73) Proprietor: Ruben Hägglunds Maskin AB, 579 32 Högsby (SE)
(72) Inventor: HÄGGLUND, Ruben, 579 92 HÖGSBY (SE)
(74) Representative: Bergenstråhle Group AB

(56) References cited:
- JP-A- 2000 225 581
- US-A- 3 930 297
- US-A- 5 184 497

## Description

### Technical field

The present invention relates generally to band reeling devices and more specifically to a band reeling device intended for reeling of bands used relating to tooling machines.

### Background

In certain types of tooling machines, such as nail or screw machines, the consumable parts are fed to the machine attached to a band. When this band passes the machine, the consumable part is brought to a predetermined position after which the operation, such as a screw or nail operation, is performed. Thereafter the band is fed a further step after which the operation is repeated. The operation itself, as well as the feeding of the band, often is performed pneumatically with compressed air, although other types of feeders exists.

These bands of screws or nails are often very long. For example, a band of 600 screws can be about six meter long and have a width of about 15-20 millimeters. After passing the tooling machine, they extend out of the machine and often end up on the floor next to the machine, which is an inconvenience and sometimes even a danger, as the operator may be disturbed or fall over consumed bands. A band reeling device according to the preamble of claim 1 is presented in US 5,184,497.

### Summary of the invention

An object of the present invention is thus to eliminate the problems of feed bands at tooling machines which are not taken care of after use.

According to the invention there is provided a band reeling device for reeling of bands used with a tooling machine, such as a nail or screw machine, comprising a base member adapted to be fixed relative to the tooling machine, a reeling member positioned on top of the base member and adapted to rotate relative to the base member, wherein the reeling member comprises a band locking mechanism arranged for locking a band which, when operated by the tooling machine, is fed from this tooling machine, so that during operation of the tooling machine, the band is rolled up on the reeling member, which is characterized by that the reeling member comprises a groove, in which the band locking mechanism is arranged, wherein the band locking mechanism comprises a locking arm with a shaft and a blade which at one end of the shaft extending into the groove. Thus, it is possible to achieve an automated activation of the band reeling.

In a preferred embodiment, the reeling member is built by a plurality of discs, preferably six discs, which are disposed on the base member as a package. Thereby is a compact construction achieved that can still include necessary functions, such as the band locking mechanism.

In a preferred embodiment, the groove is a curved groove. As a result, a band output by the tooling machine can be picked up and locked in the reeling member.

In a preferred embodiment, the band locking mechanism comprises a resilient tongue which extends out into the groove substantially across the entire width of the groove. Thereby the band is reliably locked to the reeling member.

The locking arm is preferably rotatably mounted between a first end position and a second end position via a band locking position, wherein the locking arm preferably is biased towards the first end position.

In a preferred embodiment, the band reeling device comprises a locking pin disposed for displacement between a locking position, in which the rotation of the reeling member is blocked, and a release position, in which the rotation of the reeling member is allowed, whereby the locking pin preferably extending through the entire reeling member, wherein the locking arm in the first end position engages the locking pin, preferably by a recess disposed on the locking arm and a groove in the locking pin.

In a preferred embodiment, the locking arm is arranged to move from the first end position when a band is inserted into the groove, wherein the locking arm releases the engagement with the groove in the locking pin and is moved to the release position.

In a preferred embodiment, the base member comprises a piston, preferably a pneumatic piston, arranged for a reciprocating movement which imparts a rotational movement to the reeling member in a feed direction of the band. When the piston is a pneumatic piston, a source of compressed air affecting the pneumatic piston is the same source of compressed air that causes the tooling machine to operate, whereby the rotation of the reeling member is synchronized with a feed of the band provided by the tooling machine. In doing so, an effective reeling of the band is achieved.

In a preferred embodiment, the rotation of the reeling member is adapted so that the band has an appropriate stretching by selecting one or more parameters such as a stroke length for the reciprocating motion of the piston, compressed air characteristics driving the piston and the reeling member diameter.

In a preferred embodiment, the band reeling device comprises a free-hub arranged in the base member and which co-operates the reeling member. This enables stepwise rotation of the reeling member without rotating back and keeping the band tense all the time.

### Short description of the drawings

The invention will now be described, by way of example, with reference to the accompanying drawings in which:
Fig. 1 is an exploded view of a band reeling device according to the invention;
Fig. 2 shows the band reeling device of Fig. 1 mounted on a tooling machine and with a partially rolled up band;
Fig. 3 is an end view from above of the band reeling device;
Fig. 4 shows the band reeling device partially in exploded view showing a band locking mechanism included in the band reeling device;
Fig. 5 shows the band locking mechanism more in detail;
Fig. 6 shows the band locking mechanism with a band inserted into the band reeling device;
Fig. 7a shows a section through the band reeling device showing the extent of a locking pin at locked operation for the band reeling device;
Fig. 7b is a corresponding figure to Fig. 7a but with the locking pin at activated operation for the band reeling device;
Fig. 8 is a section partly in exploded view of the band reeling device showing the assembly of discs included in the band reeling device;
Fig. 9 shows the corresponding view to Fig. 8 but with the included discs in place; and
Fig. 10 is a section through the band reeling device showing a pneumatic piston included in the band reeling device.

### Description of embodiments

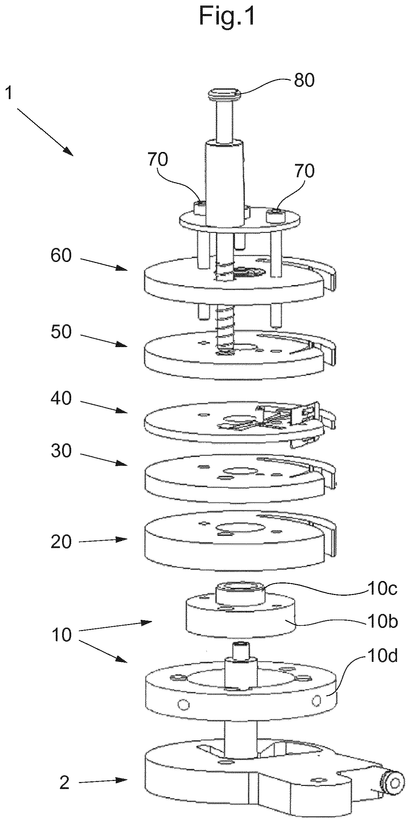

In the following, a detailed description of an embodiment of a band reeling device according to the invention will be given. Initially with reference to Fig. 1, an exploded view of a band reeling device according to the invention is generally referred to as 1. The band reeling device 1 is built up by a plurality of discs, preferably six discs, which are disposed on a base member 2. The discs as well as the base member are preferably made of metal, but also plastic is a possible material.

The first lowermost disc 10 comprises two parts: an outer ring 10a and an inner disk 10b which are mutually rotatable. In the inner disk 10b a pin 10c is provided.

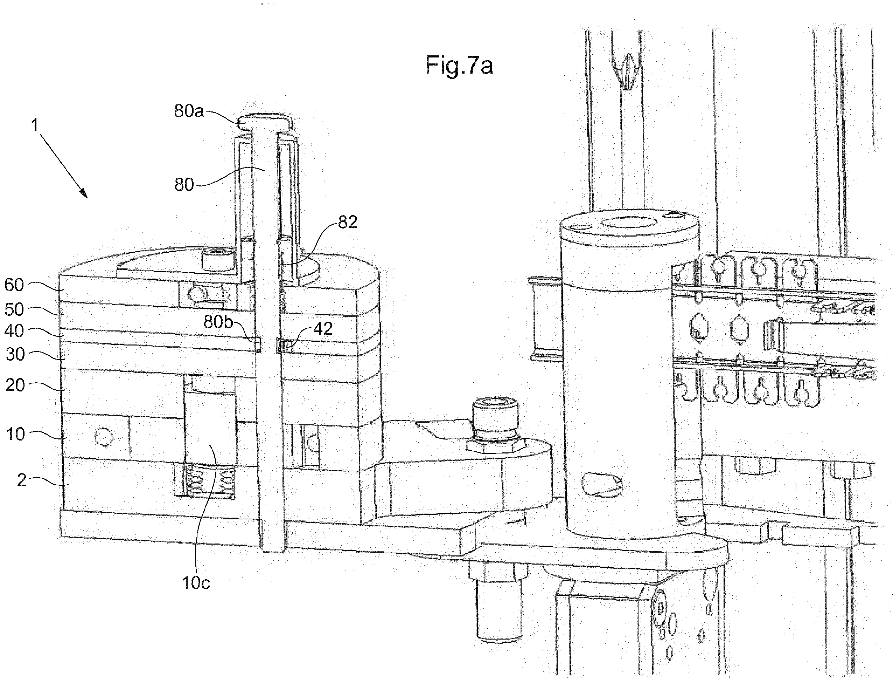

The second disc 20 is disposed abutting the first disc 10 with the pin 10c extending into a center hole in the second disk 20, see for example, Fig. 7a, which is disposed on top of the first disc 10.

The third disc 30 as well as the fifth disc 50 is disposed on either side of the fourth disc 40 and have the function of holding a band locking mechanism in place, as will be explained below.

The sixth disc 60 is disposed at the top and serves as a cohesive end disc. The package of discs 10b, 20, 30, 40, 50 and 60 is held together by means of two screw joints 70 to form a reeling member for a band as will be described below. Further, in Fig. 1, a locking pin 80 is shown which has the function of locking and releasing the rotation of the reeling member and hence the function of the band reeling device 1.

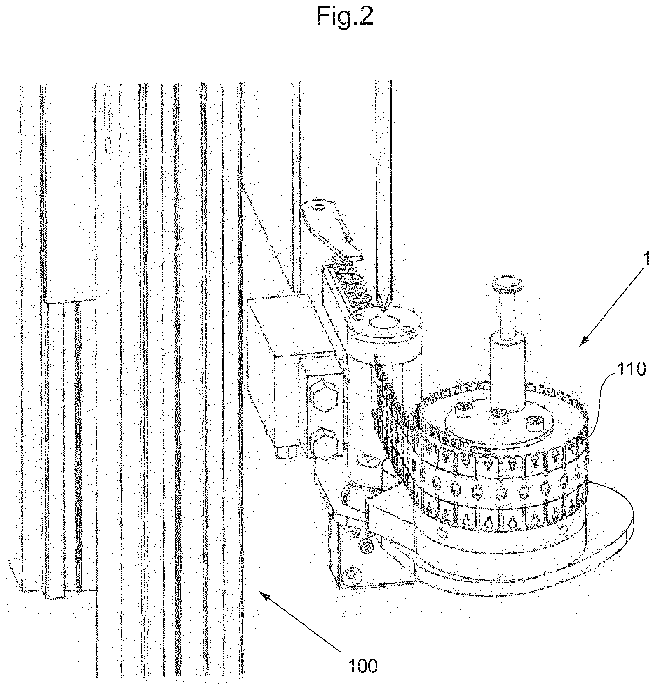

Referring to Figure 2, the band reeling device 1 is shown mounted adjacent to a tooling machine, generally referred to as 100. In the figure, a band 110 is shown for feeding nails, and in the figure, the band 110 is partially reeled on the band reeling device 1. This has the function of, as the band 110 is fed through the tooling machine 100, rolling up the band to form a manageable roll and thus preventing it from being an annoyance and obstacle to the operation.

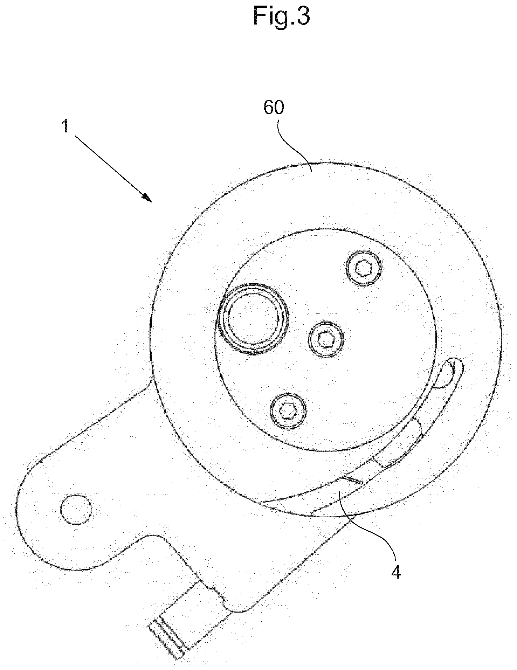

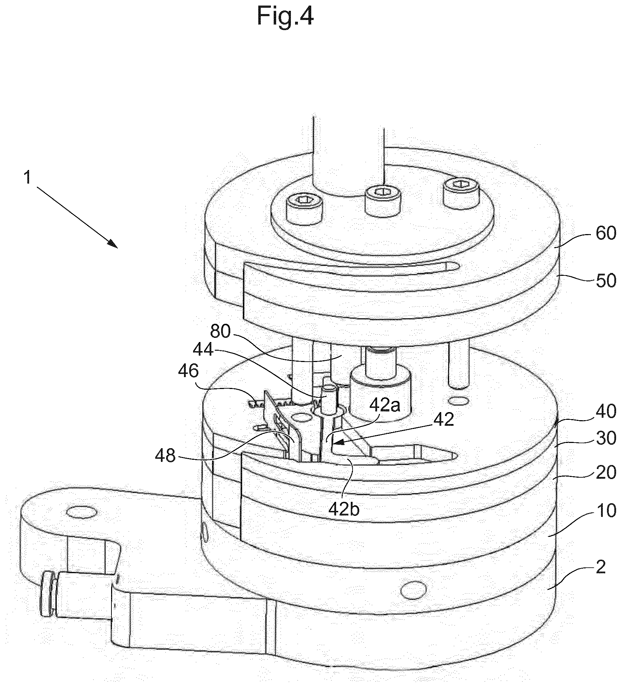

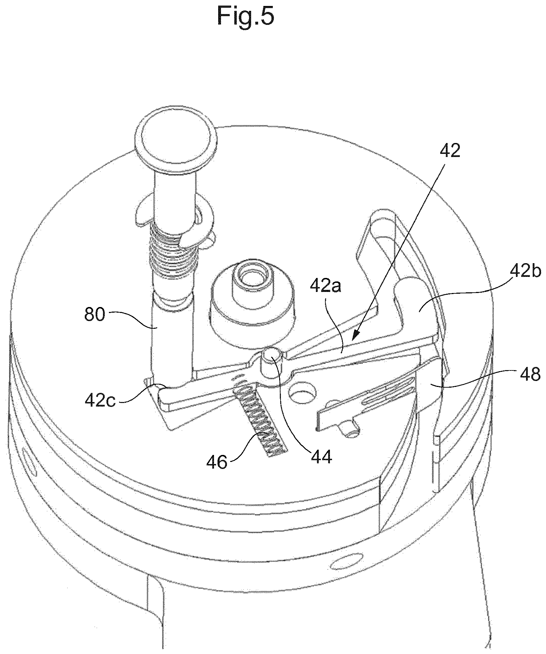

The band is attached to a groove, which in the illustrated embodiment is a curved groove 4, see Fig. 3, which extends along a large part of the height of the reeling member, i.e. the second to sixth discs 20, 30, 40, 50, 60, of which in Fig. 3 only the sixth disc 60 is visible. The band reeling device 1 is mounted relative to the tooling machine in such a way that, when the tooling machine operation is commenced and the band 110 begins to be ejected from the tooling machine 100, it is directed toward and into the groove 4 of the band reeling device 1. In the fourth disk 40 a band locking mechanism is provided, which now will be described by reference to Fig. 4-6. The band locking mechanism comprises an elongate locking arm 42 with a form which can most closely be likened to an ice hockey stick, with a straight shaft 42a and a blade 42b, which at one end of the shaft 42a extends with an angle relative to the same. The blade 42b extends into the groove 4 and has a shape that harmonizes with the curvature of the groove 4, see Fig. 5.

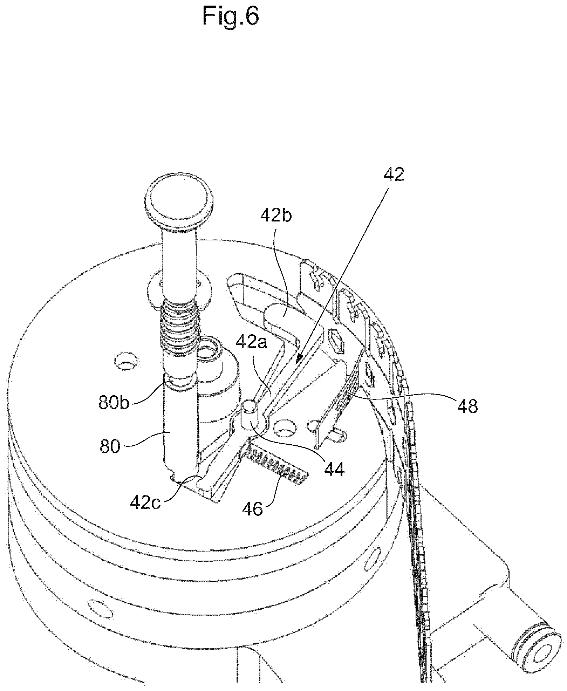

The locking arm is placed in a recess in the fourth disk 40 and is rotatably mounted on a locking arm pin 44 between a first end position, as shown in Fig. 5, and a second end position via a band locking position, as shown in Fig.6. A Spring 46 acts against the shaft 42a which biases the locking arm against the first end position shown in Fig. 5.

A recess 42c is provided in the shaft 42a of the locking arm 42 which cooperates with the locking pin 80, as will be explained below.

The band locking mechanism also comprises a resilient tongue 48, disposed in the fourth disc so that it extends into the groove 4 substantially across the entire width of the groove. The tongue 48, which is preferably made of metal, is angled to allow insertion of a band 110 into the groove 4, but prevents the pulling out of the band in the opposite direction. This is shown in Fig. 6 where a band 110 has been directed into the groove 4 and has passed the tongue 48, which has springed away upon insertion of the band 110. The band reeling device is at this stage in a locked position, which means that it cannot rotate. The band has then passed the locking arm 42 and rotated it to the position shown in Fig. 6, i.e. the above-mentioned band locking position.

The function of the locking pin 80 will now be explained. This extends through a hole extending from the top of the band reeling device 1 and through all the discs down to the base member 2, i.e. through the entire reeling member 10b, 20, 30, 40, 50, 60. The locking pin 80 is spring loaded in a direction upward by means of a locking pin spring 82, see Fig. 7a, which is mounted around the locking pin 80 between a knob or handle 80a and the fifth disc 50. Further, the locking pin 80 is provided with a circumferential groove or waist 80b which in the locking position shown in Fig. 7a is in height with the fourth disc 40 and more particularly at the height of the locking arm 42.

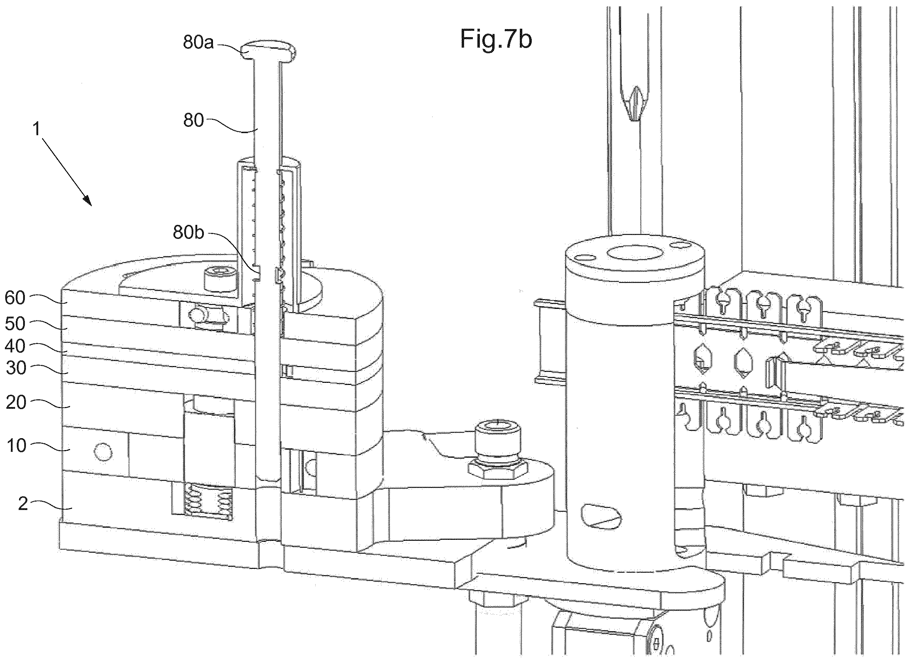

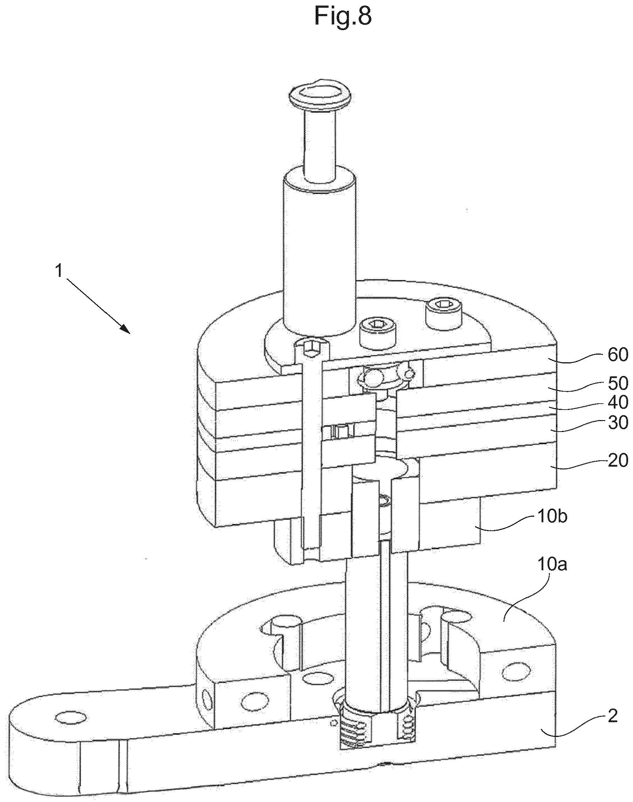

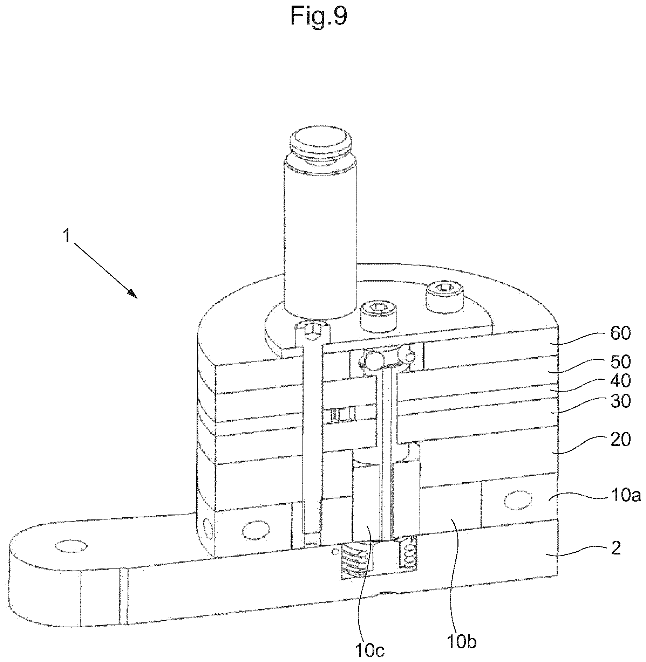

When the locking arm 42 is moved from the first end position, i.e. when the band 110 is inserted into the groove 4, the locking pin 80 is released, i.e. the recess 42c of the locking arm releases engagement with the groove 80b in the locking pin 80, which causes the locking pin, as a result of the spring force exerted by the spring 82, to move from a lower end position, the locking position shown in Fig. 7a, to an upper end position, the release position shown in Fig. 7b. The function of the band reeling device 1 in its operating mode, i.e. with the locking pin 80 in the release position, will now be explained with reference to Figs. 8-10.

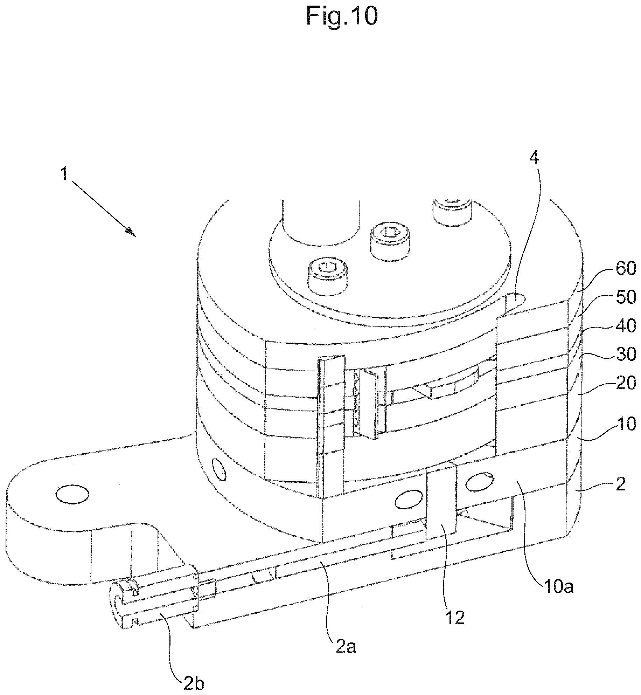

Fig. 8 shows how the various discs in the band reeling devices are assembled. The base member 2, which is mounted appropriately relative to the tooling machine, is coupled to the outer portion 10a of the first disc 10, via a pin 12, see Fig. 10, which cooperates with a pneumatic piston 2a which is arranged to be actuated by compressed air connected to a compressed air nipple 2b. The piston 2a is arranged for a reciprocating movement which imparts the outer portion 10a of the first disc 10, and hence the entire reeling member, a rotational movement in the same direction as the band 110 is fed.

The outer portion 10a of the first disc is provided with a free-hub in the form of four engagements which cooperate with the inner portion 10b of the first disc 10. This means that when the outer portion 10a of the first disc 10 is imparted a rotation which cooperates with the feeding of the band 110 by means of the pneumatic piston 2a, the inner part 10b follows the first disc 10 and the other discs, i.e. the second to sixth discs 20, 30, 40, 50 and 60 in this movement. When the pneumatic piston performs its return movement and the outer portion 10a of the first disc 10 with it, the free-hub assures that the other discs do not rotate back, i.e. towards the feeding direction of the band 110. As the pneumatic piston 2a causes repeated reciprocating movements, the second to the sixth discs 20, 30, 40, 50 and 60 will rotate stepwise in a direction co-operating with the advancement of the band 110.

The source of compressed air connected to the nipple 2b and which actuates the pneumatic piston 2a is preferably the same source of compressed air that causes the tooling machine to operate, so that the rotation of the other discs 20-60 is synchronized with the feeding of the band 110 which is provided by the tooling machine 100. By appropriate selection of parameters including the characteristics of the compressed air, the stroke length of the pneumatic piston 2a and the diameter of the discs, the rotation of the band reeling device 1 can be adjusted so that the band 110 always has a suitable stretching. In a preferred embodiment, the stroke length of the pneumatic piston 2a is 8-14 mm, the diameter of the discs is approximately 70 mm and the height of the band reeling device 1 is approximately 55 mm, but these dimensions can of course be adapted to the current application.

Note that the transition from the locking mode to the operative mode of the band reeling device 1 occurs automatically when the band 110 being fed affecting the locking mechanism. When the entire band 110 is ejected and fully up-rolled on the band reeling device 1, the operator interrupts the operation, removes the reeled band from the band reeling device 1 by pulling it upward, where after the operation can start over. To facilitate the removal of the reeled band 110 from the band reeling device 1, this is preferably made slightly tapered upward so that the top, i.e. the sixth disc 60 has slightly smaller diameter than the fifth disc 50, the fifth disc has slightly smaller diameter than the fourth disc 40, etc.

A preferred embodiment of a band reeling device according to the invention has been described. It will be realized that this may vary within the scope of the appended claims without departing from the inventive idea. For example, the pneumatic piston can be replaced by a motor such as an electric motor which is activated upon reeling. This motor can have a constant moment, so if the band slacks, the reeling member rotates so that the band always is kept tensioned.

## Claims

1. A band reeling device (1) for reeling of band used in connection with a tooling machine (100), such as a nail or screw machine, comprising
- a base member (2) arranged to be fixed relative to the tooling machine (100),
- a reeling member (10b, 20, 30, 40, 50, 60) positioned on top of the base member (2) and arranged to rotate relative to the base member (2), wherein the reeling member comprises a band locking mechanism (42, 48) arranged for locking of a band (110) which at operation of the tooling machine (100) is fed from this tooling machine, so that the band (110) at operation of the tooling machine is rolled up on the reeling member,
**characterized in that**
the reeling member (10b, 20, 30, 40, 50, 60) comprises a groove (4), in which the band locking mechanism (42, 48) is arranged, wherein the band locking mechanism comprises a locking arm (42) with a shaft (42a) and a blade (42b) which extends into the groove (4) at one end of the shaft (42a).

2. The band reeling device according to claim 1, wherein the reeling member is built up of a plurality of discs, preferably six discs (10b, 20, 30, 40, 50, 60), which are disposed on the base member (2) as a package.

3. The band reeling device according to claim 1 or 2, wherein the groove (4) is a curved groove.

4. The band reeling device according to claim 3, wherein the band locking mechanism comprises a resilient tongue (48), which extends into the groove (4) substantially across the entire width of the groove.

5. The band reeling device according to any one of claims 1-4, wherein the locking arm (42) is rotatably mounted between a first end position and a second end position, via a band locking position, wherein the locking arm preferably is biased towards the first end position.

6. The band reeling device according to claim 5, comprising a locking pin (80) arranged for movement between a locking position, in which the rotation of the reeling member (10b, 20, 30, 40, 50, 60) is blocked, and a release position, in which the rotation of the reeling member is allowed, wherein the locking pin (80) preferably extends through the entire reeling member (10b, 20, 30, 40, 50, 60), wherein the locking arm (42) in the first end position engages with the locking pin (80), preferably by a recess (42c) provided on the locking arm (42) and a groove (80b) in the locking pin (80).

7. The band reeling device according to claim 6, wherein the locking arm (42) is arranged to move from the first end position when a band (110) is inserted into the groove (4), whereby the locking arm (42) releases the engagement with the groove in the locking pin (80) and this is moved to the release position.

8. The band reeling device according to any one of claims 1-7, wherein the base member (2) comprises a piston, preferably a pneumatic piston (2a), arranged for a reciprocating movement which imparts a rotation movement to the reeling member in a feed direction of the band (110).

9. The band reeling device according to claim 8, wherein the piston (2a) is a pneumatic piston, wherein a source of compressed air affecting the pneumatic piston (2a) is the same source of compressed air that causes the tooling machine to operate, whereby the rotation of the reeling member (10b, 20, 30, 40, 50, 60) is synchronized with a feed of the band (110) provided by the tooling machine (100).

10. The band reeling device according to claim 8 or 9, wherein the rotation of the reeling member is adapted such that the band (110) has an appropriate stretch by selecting one or more parameters such as a stroke for the reciprocating motion of the piston, compressed air characteristics which drives the piston and the diameter of the reeling member.

11. The band reeling device according to any one of claims 1-10, comprising a free-hub arranged in the base member (2) and which cooperates with the reeling member (10b, 20, 30, 40, 50, 60).

## Patentansprüche

1. Bandaufrollvorrichtung (1) zum Aufrollen eines Bandes, das in Verbindung mit einer Werkzeugmaschine (100), beispielsweise einer Nagel- oder Schraubenmaschine, verwendet wird, umfassend
- ein Basiselement (2), das relativ zu der Werkzeugmaschine (100) befestigbar ist,
- ein Aufrollelement (10b, 20, 30, 40, 50, 60), das auf dem Basiselement (2) angeordnet ist und relativ zu dem Basiselement (2) drehbar ist, wobei das Aufrollelement einen Bandsperrmechanismus (42, 48) umfasst, der zur Verriegelung eines Bandes (110) angeordnet ist, das bei Betrieb der Werkzeugmaschine (100) von dieser Werkzeugmaschine zugeführt wird, so dass das Band (110) beim Betrieb der Werkzeugmaschine auf dem Aufrollelement aufgerollt wird,
**dadurch gekennzeichnet, dass**
das Aufrollelement (10b, 20, 30, 40, 50, 60) eine Nut (4) umfasst, in der der Bandsperrmechanismus (42, 48) angeordnet ist, wobei der Bandsperrmechanismus einen Verriegelungsarm (42) mit einer Welle (42a) und einer Klinge (42b) umfasst, die sich an einem Ende der Welle (42a) in die Nut (4) erstreckt.

2. Bandaufrollvorrichtung nach Anspruch 1, wobei das Aufrollelement aus einer Vielzahl von Scheiben aufgebaut ist, vorzugsweise sechs Scheiben (10b, 20, 30, 40, 50, 60), die als ein Paket auf dem Basiselement (2) angeordnet sind.

3. Bandaufrollvorrichtung nach Anspruch 1 oder 2, wobei die Nut (4) eine gekrümmte Nut ist.

4. Bandaufrollvorrichtung nach Anspruch 3, wobei der Bandsperrmechanismus eine elastische Zunge (48) umfasst, die sich im Wesentlichen über die gesamte Breite der Nut in die Nut (4) erstreckt.

5. Bandaufrollvorrichtung nach einem der Ansprüche 1-4, wobei der Verriegelungsarm (42) zwischen einer ersten Endposition und einer zweiten Endposition über eine Bandsperrposition drehbar gelagert ist, wobei der Verriegelungsarm vorzugsweise in Richtung auf die erste Endposition vorgespannt ist.

6. Bandaufrollvorrichtung nach Anspruch 5, umfassend einen Verriegelungsstift (80), der zur Bewegung zwischen einer Verriegelungsposition, in der die Drehung des Aufrollelements (10b, 20, 30, 40, 50, 60) blockiert ist, und einer Freigabeposition, in der die Drehung des Aufrollelements ermöglicht ist, angeordnet ist, wobei sich der Verriegelungsstift (80) vorzugsweise durch das gesamte Aufrollelement (10b, 20, 30, 40, 50, 60) erstreckt,
wobei der Verriegelungsarm (42) in der ersten Endposition mit dem Verriegelungsstift (80) in Eingriff steht, vorzugsweise durch eine am Verriegelungsarm (42) vorgesehene Ausnehmung (42c) und eine Nut (80b) im Verriegelungsstift (80).

7. Bandaufrollvorrichtung nach Anspruch 6, wobei der Verriegelungsarm (42) so angeordnet ist, dass er sich aus der ersten Endposition bewegt, wenn ein Band (110) in die Nut (4) eingeführt wird, wodurch der Verriegelungsarm (42) den Eingriff mit der Nut im Verriegelungsstift (80) freigibt und dieser in die Freigabeposition bewegt wird.

8. Bandaufrollvorrichtung nach einem der Ansprüche 1-7, wobei das Basiselement (2) einen Kolben, vorzugsweise einen pneumatischen Kolben (2a), umfasst, der für eine Hin- und Herbewegung angeordnet ist, die dem Aufrollelement in einer Vorschubrichtung des Bandes (110) eine Drehbewegung vermittelt.

9. Bandaufrollvorrichtung nach Anspruch 8, wobei der Kolben (2a) ein pneumatischer Kolben ist, wobei eine den pneumatischen Kolben (2a) beeinflussende Druckluftquelle die gleiche Druckluftquelle ist, die den Betrieb der Werkzeugmaschine bewirkt, wodurch die Drehung des Aufrollelements (10b, 20, 30, 40, 50, 60) mit einem Vorschub des Bandes (110) synchronisiert wird, der von der Werkzeugmaschine (100) bereitgestellt wird.

10. Bandaufrollvorrichtung nach Anspruch 8 oder 9, wobei die Drehung des Aufrollelements derart konfiguriert ist, dass das Band (110) eine geeignete Dehnung aufweist, indem ein oder mehrere Parameter, wie beispielsweise ein Hub für die Hin- und Herbewegung des Kolbens, die den Kolben antreibende Druckluftcharakteristiken, und den Durchmesser des Aufrollelements, gewählt werden.

11. Bandaufrollvorrichtung nach einem der Ansprüche 1-10, umfassend eine freie Nabe, die in dem Basiselement (2) angeordnet ist und die mit dem Aufrollelement (10b, 20, 30, 40, 50, 60) zusammenwirkt.

## Revendications

1. Dispositif d'enroulement de bande (1) pour enrouler une bande utilisé en liaison avec une machine d'outillage (100), telle qu'une machine à clouer ou à visser, comprenant
- un élément de base (2) conçu pour être fixe par rapport à la machine d'outillage (100),
- un élément enrouleur (10b, 20, 30, 40, 50, 60) positionné sur le dessus de l'élément de base (2) et conçu pour tourner par rapport à l'élément de base (2), dans lequel l'élément d'enroulement comprend un mécanisme de verrouillage de bande (42, 48) conçu pour verrouiller une bande (110) qui, lors du fonctionnement de la machine d'outillage (100), est alimentée à partir de cette machine d'outillage, de sorte que la bande (110), lors du fonctionnement de la machine d'outillage, est enroulée sur l'élément d'enroulement,
**caractérisé en ce que**
l'élément d'enroulement (10b, 20, 30, 40, 50, 60) comprend une rainure (4), dans laquelle est agencé le mécanisme de verrouillage de bande (42, 48), dans lequel le mécanisme de verrouillage de bande comprend un bras de verrouillage (42) avec un arbre (42a) et une lame (42b) qui s'étend dans la rainure (4) à une extrémité de l'arbre (42a).

2. Dispositif d'enroulement de bande selon la revendication 1, dans lequel l'élément d'enroulement est constitué d'une pluralité de disques, de préférence six disques (10b, 20, 30, 40, 50, 60), qui sont disposés sur l'élément de base (2) sous la forme d'un paquet.

3. Dispositif d'enroulement de bande selon la revendication 1 ou 2, dans lequel la rainure (4) est une rainure incurvée.

4. Dispositif d'enroulement de bande selon la revendication 3, dans lequel le mécanisme de verrouillage de bande comprend une languette élastique (48) qui s'étend dans la rainure (4) sensiblement sur toute la largeur de la rainure.

5. Dispositif d'enroulement de bande selon l'une quelconque des revendications 1-4, dans lequel le bras de verrouillage (42) est monté de manière rotative entre une première position d'extrémité et une seconde position d'extrémité, via une position de verrouillage de bande, dans lequel le bras de verrouillage est de préférence sollicité vers la première position d'extrémité.

6. Dispositif d'enroulement de bande selon la revendication 5, comprenant une broche de verrouillage (80) agencée pour se déplacer entre une position de verrouillage, dans laquelle la rotation de l'élément d'enroulement (10b, 20, 30, 40, 50, 60) est bloquée, et une position de libération, dans laquelle la rotation de l'élément d'enroulement est autorisée, dans laquelle la broche de verrouillage (80) s'étend de préférence à travers l'élément d'enroulement entier (10b, 20, 30, 40, 50, 60),
dans lequel le bras de verrouillage (42), dans la première position d'extrémité, vient en prise avec la broche de verrouillage (80), de préférence par un évidement (42c) prévu sur le bras de verrouillage (42) et une rainure (80b) dans la broche de verrouillage (80).

7. Dispositif d'enroulement de bande selon la revendication 6, dans lequel le bras de verrouillage (42) est conçu pour se déplacer à partir de la première position d'extrémité lorsqu'une bande (110) est insérée dans la rainure (4), le bras de verrouillage (42) se libérant alors de la mise en prise avec la rainure dans la broche de verrouillage (80), et celle-ci est déplacée dans la position de libération.

8. Dispositif d'enroulement de bande selon l'une quelconque des revendications 1-7, dans lequel l'élément de base (2) comprend un piston, de préférence un piston pneumatique (2a), conçu pour un mouvement de va-et-vient qui confère un mouvement de rotation à l'élément d'enroulement dans une direction d'alimentation de la bande (110).

9. Dispositif d'enroulement de bande selon la revendication 8, dans lequel le piston (2a) est un piston pneumatique, dans lequel une source d'air comprimé affectant le piston pneumatique (2a) est la même source d'air comprimé que celle qui amène la machine d'outillage, la rotation de l'élément d'enroulement (10b, 20, 30, 40, 50, 60) étant alors synchronisée avec une alimentation de la bande (110) fournie par la machine d'outillage (100).

10. Dispositif d'enroulement de bande selon la revendication 8 ou 9, dans lequel la rotation de l'élément d'enroulement est adaptée de sorte que la bande (110) présente un étirement approprié en sélectionnant un ou plusieurs paramètres tels qu'une course pour le mouvement de va-et-vient du piston, des caractéristiques de l'air comprimé qui entraîne le piston et le diamètre de l'élément d'enroulement.

11. Dispositif d'enroulement de bande selon l'une quelconque des revendications 1-10, comprenant un moyeu libre agencé dans l'élément de base (2) et qui coopère avec l'élément d'enroulement (10b, 20, 30, 40, 50, 60).
